# EUROPEAN PATENT SPECIFICATION

(11) **EP 2 548 435 B1**
(45) Date of publication and mention of the grant of the patent: **06.03.2019**
(21) Application number: 12177532.4
(22) Date of filing: 23.07.2012
(51) Int. Cl.: A01G 33/00, E02B 3/12, E02D 17/20

(54) **Supporting structure, method of planting rhizomatous water plants, and use of the supporting structure**
Trägerkonstruktion, Verfahren zum Anpflanzen von rhizombildenden Wasserpflanzen sowie Verwendung der Trägerkonstruktion
Structure de support, procédé de plantation des plantes aquatiques developpant des rhizome et l'utilisation de la structure de support

(30) Priority: 22.07.2011 IT MI20111371
(43) Date of publication of application: 23.01.2013
(73) Proprietor: Saipem S.p.A., San Donato Milanese (IT)
(72) Inventor: Magliola, Carlo, 60129 Ancona (IT); Giovannini, Umberto, 20094 Corsico (IT); Badalamenti, Fabio, 90145 Palermo (IT); Faidutti, Denis, 33050 Mortegliano (IT); Mottini, Mauro, 27020 Travacò Siccomario (IT)
(74) Representative: Bergadano, Mirko

(56) References cited:
- DE-A1- 10 309 151
- FR-A1- 2 917 103
- US-A- 5 641 244

## Description

The present invention relates to a supporting structure for planting rhizomatous water plants. More specifically, the present invention relates to a supporting structure for planting cuttings of Posidonia Oceanica, which is endemic to the Mediterranean Sea, and has the same characteristics as land plants, i.e. rhizomes, stems, leaves, flowers and fruit. Posidonias grow at heights of 3 to 47 metres, depending on the transparency of the water, form vast underwater meadows which are vital to the entire marine ecosystem, grow mainly in sandy salt-water beds and, because of their sensitivity to changes in environmental conditions, are considered a good biological water quality indicator.

Posidonia Oceanica meadows sometimes recede in certain marine sites, resulting in a grave loss of biodiversity and deterioration in water quality. Water plants, particularly Posidonias, must therefore be planted to rebuild underwater ecosystems and, at times, to firm up the surface layer of sandy underwater beds subject to erosion. Posidonia rhizomes, in fact, form a dense network, which provides for effectively strengthening the surface layer of the bed.

Partial, temporary destruction of water plant meadows is also caused by the construction of underwater installations involving work on the underwater bed, such as digging trenches to bury cables and/or pipelines along coastlines, to protect the cables or pipelines from blunt objects, such as trailing anchors, nets, etc.

Digging and burying work obviously damages any water plants along the trench line, so adult plants along and close to the trench are best transferred to safe, relatively contiguous areas where similar ecosystems can be reconstructed. In other words, a new ecosystem must be created to compensate for the one temporarily impoverished by construction of underwater installations.

As an alternative to transplanting adult plants, water plant cuttings can also be planted in given suitable areas to compensate for impoverished meadows.

Existing literature (Boudouresque, 1996) provides only generally accepted guidelines - a sort of Good Conduct Code - by which to select compensatory transplant or planting sites.

According to the main guidelines in the code :
- the selected transplant site must be one in which Posidonias have already grown in the past, or which has been suitably modified to provide the right environmental conditions for their growth;
- the factors responsible for killing the plant must no longer exist;
- transplanting must not be carried out close to extensive meadows;
- any replanting project must be tested beforehand;
- the taking of cuttings must not endanger natural vegetation;
- replanting must be conducted as part of an overall regional ecosystem management strategy.

The success of the operation depends strongly on choosing the right transplant density, which is what determines growth of the rhizome. Existing literature states that Posidonia rhizomes grow at a rate of a few centimetres a year in low-density conditions.

Transplant density choices must therefore be made bearing in mind all the factors involved. On the one hand, density must be such as to deposit sufficient sediment, in normal conditions, to anchor the rhizomes firmly to the bed, but without reaching the critical density level. And, on the other, it must be low enough to promote colonization of the substrate surrounding the transplant, to maintain a high growth rate of the rhizome. This aspect normally takes precedence over simply preserving numbers of plants more or less equal to natural-meadow density.

Using these general guidelines based on marine biology studies, methods and equipment for transplanting and/or planting rhizomatous water plants have been designed. Some of these are described in WO 2007/054991 A1, EP 736,494 A2 (natural fibre mattress), and FR 2,239,120, FR 2,623,366, FR 2,695,536, EP 621,377 B1 (wire netting cage with organic plant nutrients), but are not always successful in terms of rooting the cuttings.

The method most widely used at present to plant Posidonia Oceanica cuttings is the one described in Patent Application WO 2007/054991.

This method is performed manually by qualified divers, who are given a training course on Posidonia Oceanica, dig-up technology and procedures, and subsequent handling, and are supervised by skilled technicians, normally marine biologists. The method described in Patent Application WO 2007/054991 employs concrete frames roughly 50x50 cm square on the outside, 40x40 cm square on the inside, with a working area of 1600 sq.cm. The frames are 6-8 cm thick, are fitted with zinc-plated iron netting with a polygonal mesh suitable for retaining cuttings, i.e. of roughly 1-1.5 cm, and are eased onto the bed and variously arranged to cover the target area for reconstruction as best as possible. All the equipment described is installed manually by divers.

The bedding density per unit area must be selected before the cuttings are bedded. The cutting density per frame is vital to the success of the operation, as it is this which determines how fast the rhizomes grow out of the frame and root in the free sediment. Density is always calculated on the basis of the mean density observed on site, and must not be so low as to prevent sediment retention between the cuttings. Given, however, the wide range of densities observable in potentially suitable planting sites, it is best to opt for a low cutting density (20-30 per sq.m) to avoid fierce competition for light and nutrients, and to promote fast rhizome growth.

The cuttings are bedded by hand, by simply inserting the rhizomes inside the polygonal mesh, so the rhizomes or roots contact the sediment.

The frames and netting, however, do not always provide effective protection against wave motion on predominantly sandy beds, and so fail to provide for retaining the cuttings and preventing sediment shift, both of which obviously affect rooting of the cuttings.

It is an object of the present invention to provide a supporting structure for planting rhizomatous water plant cuttings, designed to eliminate the drawbacks of the known art, and which, in particular, guarantees a higher rooting success rate.

According to the present invention, there is provided a supporting structure for planting rhizomatous water plants on the bed of a body of water, the supporting structure comprising a cage having recesses for housing rhizomatous water plants; and a mass of blocks of inert material sized and packed in the cage to define a plurality of gaps extending between the blocks of inert material for housing rhizomatous water plants, wherein the cage is deformed at, to define, the recesses.

The present invention is based on the principle of retaining the rhizomes between blocks of inert material, with no need for water plant nutrients inside the cage. According to this principle, the supporting structure merely serves to moor the rhizomes firmly in place and protect them against wave motion; nutrients are transported by wave motion and settle inside the gaps between the blocks of inert material; and the gaps extend through the whole supporting structure, allowing the rhizomes to expand rapidly and cling to the blocks of inert material to anchor the cuttings more firmly.

Rhizomatous water plants break easily in severe storms, thus producing natural cuttings, which can take root wherever supporting structures of the type described are provided. The supporting structure therefore also provides for natural renewal, which means that, in severe storm areas, cuttings can be planted to less than the target density, and the difference made up by natural planting.

When packed together, the inert blocks form natural gaps, which can be used to insert and secure the rhizomes, which are inserted inside the cage netting and the gaps between the blocks of inert materials.

Recesses of predetermined size and spacing can be formed along the whole supporting structure to make planting easier. The preformed recesses communicate directly with the natural gaps, and serve to protect the plants from wave motion and, when necessary, also secure particularly small plants more firmly. Otherwise, the plants are secured inside the gaps.

The recesses are best formed in the form of grooves, each for one row of equally spaced plants.

In an alternate preferred embodiment of the invention, instead of deforming the cage for defining the recesses the supporting structure comprises a plurality of spacers inserted between the inert blocks to form cup-shaped recesses.

The spacers are preferably defined by removable tube sections inserted between the inert blocks.

Generally speaking, inserting the rhizomes at an angle to the face of the supporting structure has been found to improve growth and anchor the rhizomes more firmly.

More specifically, the supporting structure comprises a substantially flat face; and the recesses are elongated, extend inwards of the supporting structure from the flat face, and form an angle of other than 90° with the flat face.

Best rhizome growth and retention have been found to be achieved with a recess tilt angle of 40-50°.

The preformed recesses are preferably parallel.

In this way, it is possible to achieve a recess configuration best suited to protect the plants from prevailing currents and wave motion.

The inert blocks preferably comprise limestone or carbonate rocks or rock fragments, or artificially bound inert material.

The inert blocks must also be as jagged, i.e. unrounded, as possible. Irregularly shaped blocks are also preferable.

The inert blocks are arranged randomly inside the cage to promote gap formation.

To form natural gaps of suitable size to plant the rhizomes, the inert blocks are preferably of different sizes ranging between 0.03 and 0.2 m.

The cage is preferably made of 0.02 x 0.02 m mesh wire netting.

The supporting structure is preferably parallelepiped-shaped, with 0.2 to 2 m long sides, 0.10 to 0.40 m in height, and with a supporting face and a plant insertion face.

In a preferred embodiment of the invention, the supporting structure comprises a base structure with a seat, and an insert designed to fit inside the seat.

In this way, small manageable inserts can be formed, in which to insert the plants above water, e.g. on board a vessel, and which can be inserted later inside the seats in the base structure laid beforehand on the bed of the body of water.

The base structure preferably comprises a first cage; and a first mass of inert blocks sized and packed together in the first cage to define gaps in which to house the plants.

Similarly, the insert comprises a second cage; and a second mass of inert blocks sized and packed together in the second cage to define gaps in which to house the plants.

The insert is preferably much lower in height than - preferably about a quarter of the height of - the base structure.

Another object of the present invention is to provide a method of planting rhizomatous water plants on the bed of a body of water, designed to achieve a high rooting percentage.

According to the present invention, there is provided a method of planting rhizomatous water plants on the bed of a body of water, the method comprising the step of inserting the rhizomatous water plants inside gaps in a supporting structure of the type described above.

In a first preferred embodiment of the invention, the method comprises laying the supporting structure on the bed of the body of water before inserting the rhizomatous water plants inside the gaps.

More specifically, the rhizomes are selected by marine biologists and planted inside the supporting structure by divers.

In a second preferred embodiment of the invention, the step of inserting the rhizomatous water plants inside the gaps is performed above the body of water, and the method comprises laying the supporting structure on the bed of the body of water together with the rhizomatous water plants bedded inside the gaps.

In this case, the rhizomes are actually inserted inside the supporting structure by marine biologists.

Another object of the present invention is to define use of a supporting structure.

According to the present invention, there is defined use of a supporting structure as described above and laid on the bed of a body of water to promote artificial and natural planting of rhizomatous water plants.

A number of non-limiting embodiments of the present invention will be described by way of example with reference to the accompanying drawings, in which:
Figure 1 shows a side view, with parts removed for clarity, of an installation being set up on the bed of a body of water, and comprising a plurality of supporting structures for planting rhizomatous water plants on the bed of a body of water in accordance with the present invention;
Figure 2 shows a schematic of an example rhizomatous water plant cutting;
Figure 3 shows a view in perspective, with parts removed for clarity, of one of the Figure 1 supporting structures;
Figure 4 shows a larger-scale cross section, with parts removed for clarity, of a detail of the Figure 3 supporting structure;
Figure 5 shows a cross section, with parts removed for clarity, of a variation of the Figure 1, 3 and 4 supporting structure;
Figure 6 shows a cross section, with parts removed for clarity, of a supporting structure in accordance with a further variation of the present invention;
Figure 7 shows a view in perspective, with parts removed for clarity, of a plurality of side by side supporting structures with recesses as shown in Figure 4;
Figure 8 shows a view in perspective, with parts removed for clarity, of a supporting structure in accordance with a further variation of the present invention;
Figure 9 shows a partly exploded view in perspective, with parts removed for clarity, of another variation of the present invention.

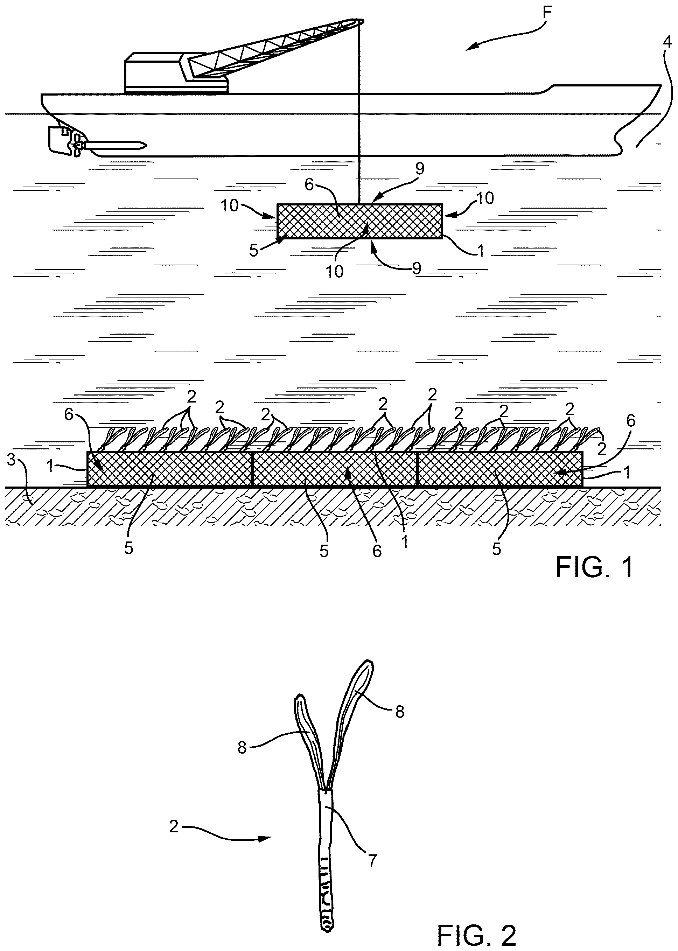

In Figure 1, number 1 indicates as a whole a supporting structure for planting rhizomatous water plants 2 on the bed 3 of a body of water 4; and F indicates a floating unit for laying a plurality of supporting structures 1 side by side on a relatively large area of bed 3.

Rhizomatous water plants 2 are selected on the basis of suitable planting characteristics. More specifically, and as shown in Figure 2, each rhizomatous water plant 2 cutting selected comprises a rhizome 7, preferably of about 1 cm in diameter and 15 cm long; and possibly a number of leaves 8 extending from one end of rhizome 7.

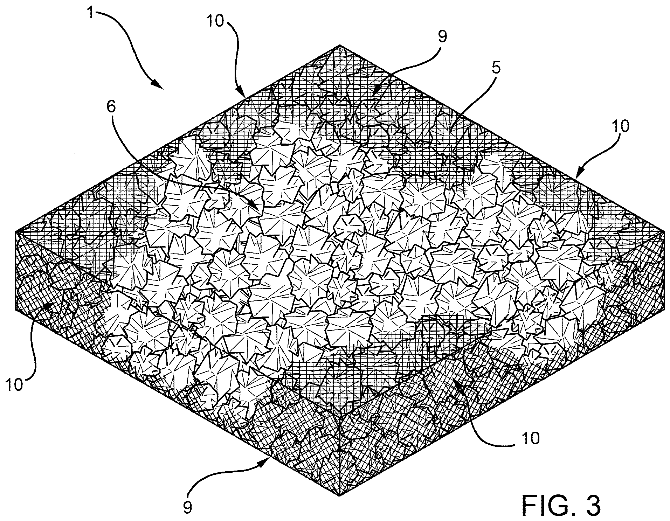

As shown in Figure 3, the supporting structure comprises a substantially parallelepiped-shaped cage 5; and a mass 6 of blocks of inert material of irregular shapes and sizes, packed inside cage 5 to define a plurality of gaps for partly housing rhizomatous water plants 2. Supporting structure 1 is parallelepiped-shaped with two base faces 9 and four lateral faces 10. One base face 9 rests on bed 3 of body of water 4 (Figure 1), and the other is used for planting rhizomatous water plant 2 cuttings. In a preferred embodiment of the invention, base faces 9 are two metres square, and the parallelepiped is 40 cm high, but supporting structure 1 may be of different sizes. More specifically, in another preferred embodiment of the invention, each supporting structure has a 0.50 m x 0.08 m rectangular base, and is 0.10 m high.

Cage 5 is made of preferably zinc-plated, 0.02 m x 0.02 m mesh wire netting.

The blocks of inert material are preferably defined by preferably limestone or carbonate rocks or rock fragments, or by artificially bound inert material. Materials with good resistance to water corrosion and scaling are preferable. The blocks of inert material must not be altered or degraded, i.e. must have surfaces rounded as little as possible, and should preferably be irregular and jagged in shaped.

The blocks of inert material are arranged randomly inside cage 5 to promote gap formation.

To form gaps of suitable size, block size selection is important. Preferable block sizes range between 0.03 and 0.2 m, and must be compatible with the size of cage 5.

In other words, by selecting the right size of the blocks of inert material, an approximate gap spacing can be defined, and the gaps distributed relatively evenly.

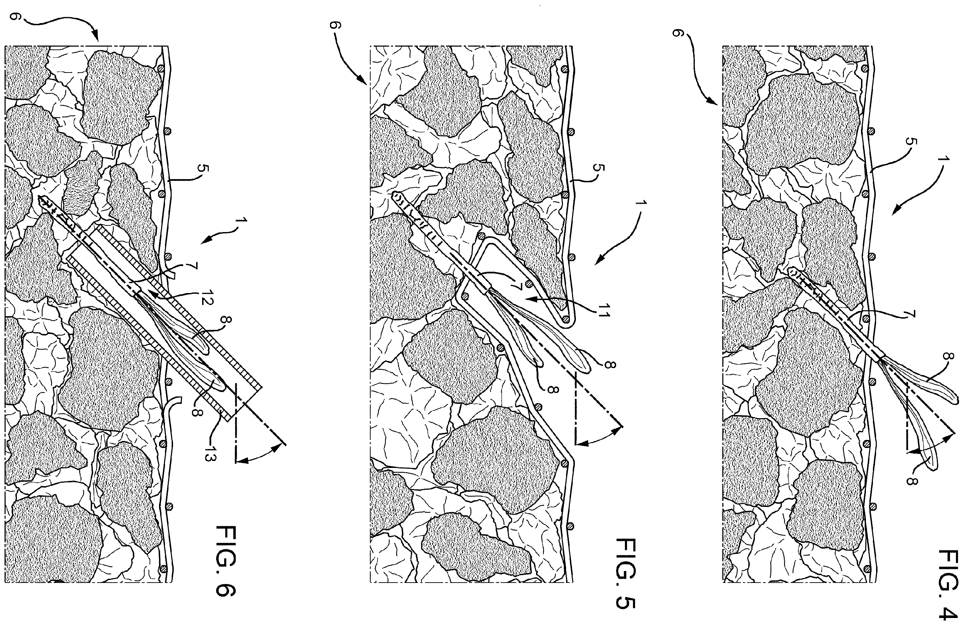

The method of planting rhizomatous water plants 2 comprises securing rhizomes 7 of rhizomatous water plants 2 between the blocks of inert material in supporting structure 1, as shown in Figure 4.

Plants 2 may be bedded either above body of water 4, before laying supporting structure 1 on bed 3, or in body of water 4, after laying supporting structure 1.

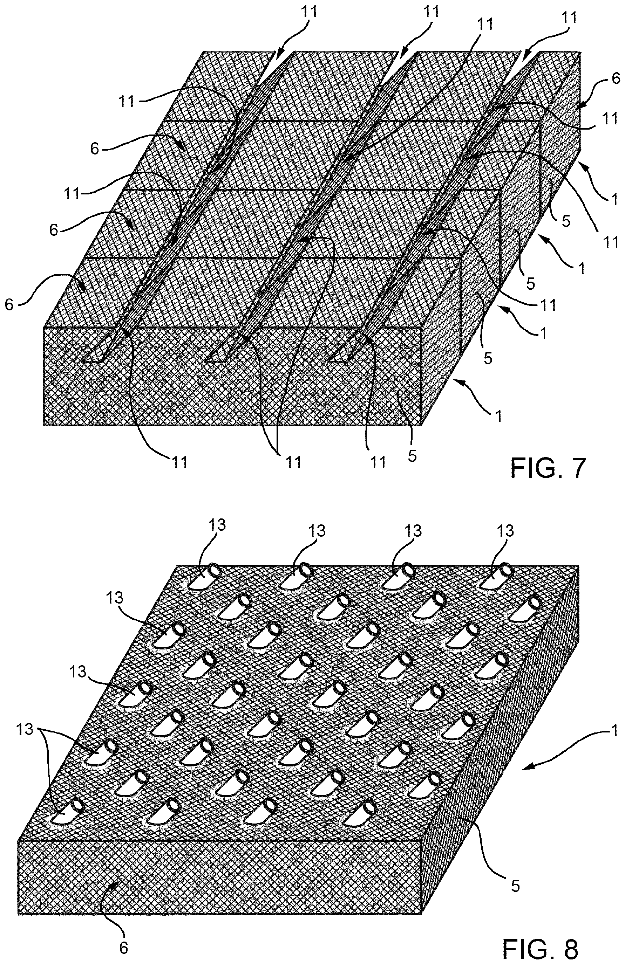

As shown in Figure 5, supporting structure 1 comprises recesses 11 for housing rhizomatous water plants 2. More specifically, recesses 11 are in the form of grooves, each for housing one row of rhizomatous water plants 2; cage 5 is deformed to define recesses 11; each recess 11 slopes at a 40-50° angle to face 9; and Figure 7 shows a plurality of supporting structures 1 with recesses 11.

In the Figure 6 embodiment, supporting structure 1 has cup-shaped recesses 12, to form which, supporting structure 1 comprises a plurality of spacers 13 inserted between the blocks of inert material and projecting from one of base faces 9. Spacers 13 are equally spaced along base face 9, as shown in Figure 8, are inserted inside the mesh of cage 5, between the blocks of inert material, and are preferably tube sections inserted between the blocks of inert material and removable once rhizomatous water plants 2 are inserted inside the gaps. Recesses 12 and spacers 13 preferably form a 40-50° angle with base face 9.

The planting method comprises inserting rhizomes 7 inside the gaps bordering on recesses 11 and 12, which provide shelter from currents and wave motion.

Spacers 13 may be removed once the rhizomatous water plant 2 cuttings are bedded.

Supporting structure 1 also has the major advantage of defining a substrate for planting rhizomatous water plants both artificially and naturally.

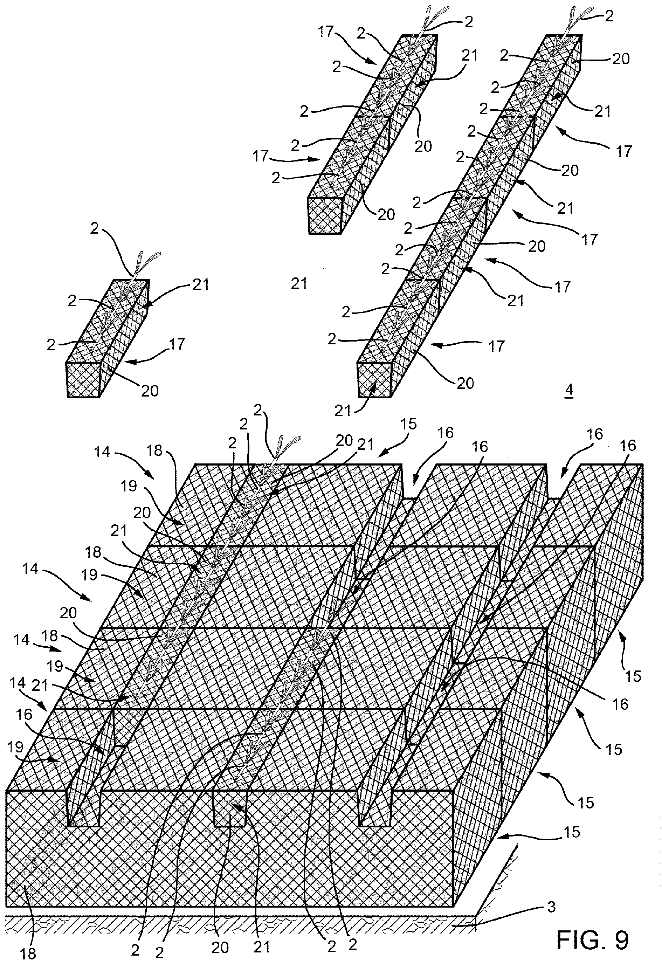

Figure 9 shows four side by side supporting structures 14, each comprising a base structure 15 with at least one seat 16 - in the example shown, three seats 16; and at least one insert 17 - in the example shown, three inserts 17 - designed to fit inside seat 16. Base structure 15 comprises a cage 18 filled with a mass 19 of blocks of inert material; and similarly, insert 17 comprises a cage 20 filled with a mass 21 of blocks of inert material.

The planting method comprises laying base structure 15 on bed 3; inserting rhizomatous water plants 2 inside inserts 17 above body of water 4; and inserting inserts 17 inside seats 16.

This variation provides for easy transport of inserts 17 with rhizomatous water plants 2 inserted inside the gaps. The inserts are easy to handle by divers underwater, while base structure 15 provides the bulk needed to withstand currents and storms, as well as additional gaps for anchoring rhizomatous water plants 2 firmly as they grow, and to trap stray pieces of rhizomatous water plants 2 broken off during storms, and so plant rhizomatous water plants 2 naturally.

Clearly, changes may be made to the embodiments described of the present invention without, however, departing from the protective scope of the accompanying Claims.

## Claims

1. A supporting structure for planting rhizomatous water plants on the bed of a body of water, the supporting structure (1; 14) comprising at least one cage (5; 18, 20) having recesses (11) for housing rhizomatous water plants (2); and a mass (6; 19, 21) of blocks of inert material sized and packed in the cage (5; 18, 20) to define a plurality of gaps extending between the blocks of inert material for housing rhizomatous water plants (2), wherein the cage (5) is deformed at, to define, the recesses (11).

2. A supporting structure as claimed in Claim 1, wherein each recess (11) is in the form of a groove.

3. A supporting structure for planting rhizomatous water plants on the bed of a body of water, the supporting structure (1; 14) comprising at least one cage (5; 18, 20) having recesses (12) for housing rhizomatous water plants (2); a mass (6; 19, 21) of blocks of inert material sized and packed in the cage (5; 18, 20) to define a plurality of gaps extending between the blocks of inert material for housing rhizomatous water plants (2); and a plurality of spacers (13) inserted between the blocks of inert material and defining said recesses (12).

4. A supporting structure as claimed in Claim 3, wherein said spacers (13) are preferably tube sections inserted between the blocks of inert material, and are preferably removable once the rhizomatous water plants (2) are inserted inside the gaps and recesses (12).

5. A supporting structure as claimed in any one of the foregoing Claims, and comprising a substantially flat face (9); the recesses (11; 12) being elongated, extending inside the supporting structure (1) from the flat face (9), and forming an angle other than a right-angle with the flat face (9).

6. A supporting structure as claimed in Claim 5, wherein the recesses (11; 12) form a 40-50° angle with respect to the flat face (9).

7. A supporting structure as claimed in any one of the foregoing Claims, wherein the recesses (11; 12) are parallel.

8. A supporting structure as claimed in any one of the foregoing Claims, wherein the blocks of inert material comprise preferably limestone or carbonate rocks or rock fragments, or artificially bound inert material.

9. A supporting structure as claimed in any one of the foregoing Claims, wherein the blocks of inert material are of different sizes ranging between 0.03 and 0.2 m.

10. A supporting structure as claimed in any one of the foregoing Claims, wherein the cage (5; 18, 20) is made of 0.02 x 0.02 m mesh wire netting.

11. A supporting structure as claimed in any one of the foregoing Claims, and in the form of a parallelepiped with 0.2 to 2 m long sides, and 0.1 to 0.4 m in height.

12. A supporting structure as claimed in any one of the foregoing Claims, and comprising a base structure (15) with a seat (16); and an insert (17) insertable inside the seat (16).

13. A supporting structure as claimed in Claim 12, wherein the base structure (15) comprises a first cage (18); and a first mass (19) of blocks of inert material sized and packed in the first cage (18) to define a plurality of gaps for housing rhizomatous water plants (2) .

14. A supporting structure as claimed in Claim 12 or 13, wherein the insert (17) comprises a second cage (20); and a second mass (21) of blocks of inert material sized and packed in the second cage (20) to define a plurality of gaps for housing rhizomatous water plants (2) .

15. A supporting structure as claimed in any one of Claims 12 to 14, wherein the insert (17) is much smaller in height than the base structure (15), and preferably about a quarter of the height of the base structure (15) .

16. A method of planting rhizomatous water plants on the bed of a body of water, the method comprising the step of securing the rhizomatous water plants (2) between blocks of inert material in a supporting structure (1; 14) as claimed in any one of the foregoing Claims.

17. A method as claimed in Claim 16, and comprising the step of laying the supporting structure (1; 14) on the bed (3) of the body of water (4) before securing the rhizomatous water plants (2) inside the gaps.

18. A method as claimed in Claim 16, wherein the step of securing the rhizomatous water plants (2) between the blocks of inert material is performed above the body of water (4); and the method comprises the step of laying the supporting structure (1; 14) on the bed (3) of the body of water (4) together with the rhizomatous water plants (2).

19. Use of a supporting structure as claimed in any one of Claims 1 to 15, wherein the supporting structure (1; 14) is laid on the bed (3) of a body of water (4) to permit both artificial and natural planting of rhizomatous water plants (2).

## Patentansprüche

1. Trägerkonstruktion zum Anpflanzen von rhizombildenden Wasserpflanzen auf dem Bett eines Gewässers, wobei die Trägerkonstruktion (1; 14) mindestens einen Käfig (5; 18, 20), der Aussparungen (11) zum Unterbringen von rhizombildenden Wasserpflanzen (2) aufweist; und eine Masse (6; 19, 21) von Blöcken aus inertem Material umfasst, das bemessen und in den Käfig (5; 18, 20) gepackt ist, um eine Vielzahl von Lücken, die sich zwischen den Blöcken aus inertem Material erstrecken, zum Unterbringen von rhizombildenden Wasserpflanzen (2) zu definieren, wobei der Käfig (5) an den Aussparungen (11) verformt ist, um diese zu definieren.

2. Trägerkonstruktion nach Anspruch 1, wobei jede Aussparung (11) die Form einer Rille aufweist.

3. Trägerkonstruktion zum Pflanzen von rhizombildenden Wasserpflanzen auf dem Bett eines Gewässers, wobei die Trägerkonstruktion (1; 14) mindestens einen Käfig (5; 18, 20), der Aussparungen (12) zum Unterbringen von rhizombildenden Wasserpflanzen (2) aufweist; eine Masse (6; 19, 21) von Blöcken aus inertem Material, die bemessen und in den Käfig (5; 18, 20) gepackt sind, um eine Vielzahl von Lücken, die sich zwischen den Blöcken aus inertem Material erstrecken, zum Unterbringen von rhizombildenden Wasserpflanzen (2) zu definieren; und eine Vielzahl von Abstandshaltern (13) umfasst, die zwischen den Blöcken aus inertem Material eingesetzt sind und die Aussparungen (12) definieren.

4. Trägerkonstruktion nach Anspruch 3, wobei die Abstandshalter (13) vorzugsweise Rohrabschnitte sind, die zwischen den Blöcken aus inertem Material eingesetzt sind, und vorzugsweise herausnehmbar sind, nachdem die rhizombildenden Wasserpflanzen (2) im Inneren der Lücken und Aussparungen (12) eingesetzt wurden.

5. Trägerkonstruktion nach einem der vorhergehenden Ansprüche, die überdies eine im Wesentlichen flache Fläche (9) umfasst; wobei die Aussparungen (11; 12) länglich sind, sich im Innern der Trägerkonstruktion (1) von der flachen Fläche (9) erstrecken und mit der flachen Fläche (9) einen Winkel bilden, der sich von einem rechten Winkel unterscheidet.

6. Trägerkonstruktion nach Anspruch 5, wobei die Aussparungen (11; 12) einen Winkel von 40 bis 50° in Bezug auf die flache Fläche (9) bilden.

7. Trägerkonstruktion nach einem der vorhergehenden Ansprüche, wobei die Aussparungen (11; 12) parallel sind.

8. Trägerkonstruktion nach einem der vorhergehenden Ansprüche, wobei die Blöcke aus inertem Material vorzugsweise Kalkstein oder Karbonatgestein oder Gesteinsfragmente oder künstlich gebundenes inertes Material umfassen.

9. Trägerkonstruktion nach einem der vorhergehenden Ansprüche, wobei die Blöcke aus inertem Material unterschiedliche Größen in einem Bereich zwischen 0,03 und 0,2 m aufweisen.

10. Trägerkonstruktion nach einem der vorhergehenden Ansprüche, wobei der Käfig (5; 18, 20) aus Maschendraht mit einer Maschenweite von 0,02 x 0,02 m hergestellt ist.

11. Trägerkonstruktion nach einem der vorhergehenden Ansprüche und in der Form eines Parallelepipeds mit Seiten mit einer Länge von 0,2 bis 2 m und einer Höhe von 0,1 bis 0,4 m.

12. Trägerkonstruktion nach einem der vorhergehenden Ansprüche, die überdies eine Basiskonstruktion (15) mit einem Sitz (16); und einen Einsatz (17) umfasst, der in den Sitz (16) einsetzbar ist.

13. Trägerkonstruktion nach Anspruch 12, wobei die Basiskonstruktion (15) einen ersten Käfig (18); und eine erste Masse (19) von Blöcken aus inertem Material umfasst, die bemessen und in den ersten Käfig (18) gepackt sind, um eine Vielzahl von Lücken zum Unterbringen von rhizombildenden Wasserpflanzen (2) zu definieren.

14. Trägerkonstruktion nach Anspruch 12 oder 13, wobei der Einsatz (17) einen zweiten Käfig (20); und eine zweite Masse (21) von Blöcken aus inertem Material umfasst, die bemessen und in den zweiten Käfig (20) gepackt sind, um eine Vielzahl von Lücken zum Unterbringen von rhizombildenden Wasserpflanzen (2) zu definieren.

15. Trägerkonstruktion nach einem der Ansprüche 12 bis 14, wobei der Einsatz (17) eine Höhe aufweist, die viel kleiner ist als diejenige der Basiskonstruktion (15) und vorzugsweise etwa ein Viertel der Höhe der Basiskonstruktion (15) beträgt.

16. Verfahren zum Anpflanzen von rhizombildenden Wasserpflanzen auf dem Bett eines Gewässers, wobei das Verfahren den Schritt zum Sichern der rhizombildenden Wasserpflanzen (2) zwischen Blöcken aus inertem Material in einer Trägerkonstruktion (1; 14) nach einem der vorhergehenden Ansprüche umfasst.

17. Verfahren nach Anspruch 16, das überdies den Schritt zum Legen der Trägerkonstruktion (1; 14) auf das Bett (3) des Gewässers (4) vor dem Sichern der rhizombildenden Wasserpflanzen (2) im Inneren der Lücken umfasst.

18. Verfahren nach Anspruch 16, wobei der Schritt zum Sichern der rhizombildenden Wasserpflanzen (2) zwischen den Blöcken aus inertem Material über dem Gewässer (4) durchgeführt wird; und das Verfahren den Schritt zum Legen der Trägerkonstruktion (1; 14) auf das Bett (3) des Gewässers (4) zusammen mit den rhizombildenden Wasserpflanzen (2) umfasst.

19. Verwendung einer Trägerkonstruktion nach einem der Ansprüche 1 bis 15, wobei die Trägerkonstruktion (1; 14) auf das Bett (3) eines Gewässers (4) gelegt wird, um sowohl das künstliche als auch das natürliche Anpflanzen von rhizombildenden Wasserpflanzen (2) zu ermöglichen.

## Revendications

1. Structure de support pour planter des plantes aquatiques rhizomateuses sur le lit d'un plan d'eau, la structure de support (1 ; 14) comprenant au moins une cage (5 ; 18, 20) ayant des évidements (11) pour loger des plantes aquatiques rhizomateuses (2) ; et une masse (6 ; 19, 21) de blocs de matière inerte dimensionnés et placés dans la cage (5 ; 18, 20) pour définir une pluralité d'espaces s'étendant entre les blocs de matière inerte pour loger des plantes aquatiques rhizomateuses (2), dans laquelle la cage (5) est déformée au niveau des évidements (11), pour les définir.

2. Structure de support selon la revendication 1, dans laquelle chaque évidement (11) se présente sous forme d'une rainure.

3. Structure de support pour planter des plantes aquatiques rhizomateuses sur le lit d'un plan d'eau, la structure de support (1 ; 14) comprenant au moins une cage (5 ; 18, 20) ayant des évidements (12) pour loger des plantes aquatiques rhizomateuses (2) ; une masse (6 ; 19, 21) de blocs de matière inerte dimensionnés et placés dans la cage (5 ; 18, 20) pour définir une pluralité d'espaces s'étendant entre les blocs de matière inerte pour loger des plantes aquatiques rhizomateuses (2) ; et une pluralité d'éléments d'espacement (13) étant insérés entre les blocs de matière inerte et définissant lesdits évidements (12).

4. Structure de support selon la revendication 3, dans laquelle lesdits éléments d'espacement (13) sont de préférence des sections tubulaires insérées entre les blocs de matière inerte, et sont de préférence amovibles une fois que les plantes aquatiques rhizomateuses (2) sont insérées à l'intérieur des espaces et des évidements (12) .

5. Structure de support selon l'une quelconque des revendications précédentes, et comprenant une face sensiblement plate (9) ; les évidements (11 ; 12) étant allongés, s'étendant à l'intérieur de la structure de support (1) depuis la face plate (9), et formant un angle autre qu'un angle droit avec la face plate (9).

6. Structure de support selon la revendication 5, dans laquelle les évidements (11 ; 12) forment un angle de 40 à 50° par rapport à la face plate (9).

7. Structure de support selon l'une quelconque des revendications précédentes, dans laquelle les évidements (11 ; 12) sont parallèles.

8. Structure de support selon l'une quelconque des revendications précédentes, dans laquelle les blocs de matière inerte comprennent de préférence des roches ou des fragments de roches calcaires ou carbonatées, ou une matière inerte liée artificiellement.

9. Structure de support selon l'une quelconque des revendications précédentes, dans laquelle les blocs de matière inerte sont de tailles différentes allant de 0,03 à 0,2 m.

10. Structure de support selon l'une quelconque des revendications précédentes, dans laquelle la cage (5 ; 18, 20) est composée d'un filet métallique à mailles de 0,02 x 0,02 m.

11. Structure de support selon l'une quelconque des revendications précédentes, et sous forme d'un parallélépipède avec des côtés de 0,2 à 2 m de long, et de 0,1 à 0,4 m de haut.

12. Structure de support selon l'une quelconque des revendications précédentes, et comprenant une structure de base (15) avec un siège (16) ; et un insert (17) pouvant être inséré à l'intérieur du siège (16).

13. Structure de support selon la revendication 12, dans laquelle la structure de base (15) comprend une première cage (18) ; et une première masse (19) de blocs de matière inerte dimensionnés et placés dans la première cage (18) pour définir une pluralité d'espaces pour loger des plantes aquatiques rhizomateuses (2).

14. Structure de support selon la revendication 12 ou 13, dans laquelle l'insert (17) comprend une seconde cage (20) ; et une seconde masse (21) de blocs de matière inerte dimensionnés et placés dans la seconde cage (20) pour définir une pluralité d'espaces pour loger des plantes aquatiques rhizomateuses (2).

15. Structure de support selon l'une quelconque des revendications 12 à 14, dans laquelle l'insert (17) est bien plus petit en hauteur que la structure de base (15), et de préférence d'environ un quart de la hauteur de la structure de base (15).

16. Procédé de plantation de plantes aquatiques rhizomateuses sur le lit d'un plan d'eau, le procédé comprenant l'étape de fixation des plantes aquatiques rhizomateuses (2) entre des blocs de matière inerte dans une structure de support (1 ; 14) selon l'une quelconque des revendications précédentes.

17. Procédé selon la revendication 16, et comprenant l'étape de dépôt de la structure de support (1 ; 14) sur le lit (3) du plan d'eau (4) avant la fixation des plantes aquatiques rhizomateuses (2) à l'intérieur des espaces.

18. Procédé selon la revendication 16, dans lequel l'étape de fixation des plantes aquatiques rhizomateuses (2) entre les blocs de matière inerte est mise en oeuvre au-dessus du plan d'eau (4) ; et le procédé comprend l'étape de dépôt de la structure de support (1 ; 14) sur le lit (3) du plan d'eau (4) conjointement avec les plantes aquatiques rhizomateuses (2).

19. Utilisation d'une structure de support selon l'une quelconque des revendications 1 à 15, dans laquelle la structure de support (1 ; 14) est déposée sur le lit (3) d'un plan d'eau (4) pour permettre une plantation à la fois artificielle et naturelle de plantes aquatiques rhizomateuses (2).
